# EUROPÄISCHE PATENTSCHRIFT

(11) **EP 1 400 279 B1**
(45) Veröffentlichungstag und Bekanntmachung des Hinweises auf die Patenterteilung: **04.11.2009**
(21) Anmeldenummer: 03020222.0
(22) Anmeldetag: 06.09.2003
(51) Int. Cl.: B01J 2/04

(54) **Verfahren zum Mikropelletieren und Pulverisieren von Flüssigkeiten**
Process for micropelletizing and pulverizing of liquids
Procédé pour la mirco-granulation et la pulvérisation de liquides

(30) Priorität: 19.09.2002 DE 10243483
(43) Veröffentlichungstag der Anmeldung: 24.03.2004
(73) Patentinhaber: Air Liquide Deutschland GmbH, 40235 Düsseldorf (DE); Messer Group GmbH, 65843 Sulzbach (DE)
(72) Erfinder: Zerwas, Stefan, 47443 Moers (DE); Laux, Peter, 56826 Lützerath (DE)
(74) Vertreter: Kahlhöfer, Hermann

(56) Entgegenhaltungen:
- EP-A- 0 731 326
- DE-A- 19 750 679
- DE-A1- 4 132 693
- GB-A- 1 559 920
- US-A- 3 670 520
- US-A- 6 153 129

## Beschreibung

Die Erfindung betrifft ein Verfahren zur Herstellung von Pellets, Mikropellets oder Pulvern aus einem flüssigen oder pelletierbaren Stoff.

Zur Herstellung von Mikropellets (Durchmesser von 1 bis max. 750 µ) werden normalerweise aufwendige Pelletiermaschinen eingesetzt, bei der die Lösungen bzw. Schmelzen über eine wasser- oder luftgekühlte Walzpresse zu Strängen von 1 bis 2 mm Durchmesser erstarrt werden. Danach werden die Stränge zu kurzen zylindrischen Pellets abgeschnitten, die anschließend in einem Zentrifugal-Apparat zu kleinen Pellets abgefräst bzw. abgerundet werden. Die Mikropellets mit dem gewünschten Durchmesser werden über die Zentrifugalkraft nach außen über eine Trennvorrichtung aufgefangen.

Bei dieser Herstellung liegt bei den meist wertvollen Produkten (Pharma-Produkte) die Ausschußrate bei ca. 20 bis 40 %, die aus Hygiene-Richtlinien nicht mehr in dem Prozeß wiederverwertet werden dürfen.

Aus der DE 41 32 693 A1 ist ein verfahren zur Herstellung von Pulvern aus einer Metallschmelte bekannt, bei dem flüssiger Stickstoff als kühlmedium zum kühlen der Metallschmelte und der verdampfte Stickstoff zum Zerstäuben der Metallschmelte eingesetzt wird. Aus der DE 197 50 679 A1 ist ein Verfahren zum Erzeugen von Pulver mikrokapseln bekannt, bei dem flüssiger Stickstoff zur Erzeugung eines großen Temperaturgradienten als Kühlmedium in einen sprühturen eingebracht wird.

Der Erfindung liegt die Aufgabe zugrunde, ein alternatives Verfahren zur Herstellung von Pellets oder Mikropellets aus einem pelletierbaren Stoff bereitzustellen.

Gelöst wurde die Aufgabe durch ein Verfahren mit den in Anspruch 1 beschriebenen Merkmalen.

Eine zur Durchführung des Verfahrens geeignete Vorrichtung zur Herstellung von Pellets, Mikropellets oder Pulvern weist eine Zuführeinrichtung für den zu verarbeitenden Stoff (z.B. den zu pelletierenden Stoff) und einen Bereich mit einem kalten oder abgekühlten Gas auf. Die Vorrichtung weist im allgemeinen eine Kühlstrecke oder Kühlzone mit einem gekühlten Gas auf. Die Kühlstrecke hat im Allgemeinen eine Länge im Bereich von 1 bis 10 m, vorzugsweise, 2 bis 8 m, besonders bevorzugt 2 bis 6 m, insbesondere 2 bis 4 m. Mittels einer Dosiereinrichtung, z.B. einer Mikrotropfvorrichtung, wird der zu pelletierende Stoff als einzelne Teilchen (vorzugsweise mit Durchmesser von 1 bis 600 Mikrometer) , z.B. Tröpfchen, in das kalte Gas eingebracht. Vorzugsweise befindet sich die Kühlstrecke in einem Kühlturm. Das kalte Gas wird z.B. aus einem kryogenen Gas (kälteverflüssigten Gas) wie Flüssigstickstoff und/oder durch Abkühlen eines Gases (z. B. durch Zumischen eines kalten Gases oder durch Kontaktierung des Gases mit einer kalten Fläche, insbesondere einem Wärmetauscher oder Kühler) erzeugt. In der Vorrichtung wird vorteilhaft ein Gasstrom aus dem gekühlten oder kalten Gas erzeugt, zum Beispiel mittels eines Ventilators. Der Gasstrom in der Vorrichtung wird im Kreis geführt. Der Gasstrom mit dem kalten Gas wird vorzugsweise in der Richtung der fallenden Teilchen im Bereich der Kühlstrecke geführt (gleichgerichteter Gasstrom). Die Teilchen oder Tröpfchen aus dem zu verarbeitenden Stoff, insbesondere einem zu pelletierenden Stoff, werden in den kalten Gasstrom gebracht. In dem Gastrom werden angefrorene oder durchgefrorene Teilchen (Pellets, Mikropellets, Pulver) gebildet. Die Temperatur des kalten Gases wird vorteilhaft mit einem Temperaturfühler erfaßt. Die Temperaturerfassung dient vorteilhaft zur Steuerung und/oder Regelung der Temperatur des kalten Gases (z.B. zum Konstanthalten der Temperatur des Gases). Die Vorrichtung enthält vorzugsweise eine Steuereinheit, insbesondere für die Temperatur-Steuerung oder Temperatur-Regelung des kalten Gases. Über ein steuerbares Ventil wird beispielsweise die zugeführte Menge des kälteverflüssigten Gases oder Kältemittels zur Erzeugung des kalten Gases geregelt und gesteuert. Die Steuereinheit kann vorteilhaft zur Steuerung der Geschwindigkeit des kalten Gasstromes (z.B. Ventilator-Steuerung) eingesetzt werden.

In den Bereich der Kühlstrecke gelangt vorzugsweise kein flüssiges Kältemittel wie kälteverflüssigtes Gas (z.B. Flüssig-Stickstoff). Der Einsatz allein von kaltem Gas im Bereich der Kühlstrecke ist besonders vorteilhaft, da Kältemittel eingespart wird.

Gegenstand der Erfindung ist ferner ein Verfahren. Bei dem Verfahren wird der zu pelletierende oder zu pulverisierende Stoff, z.B. Flüssigkeitstropfen oder Tropfen einer Schmelze, in Kontakt mit einem gekühlten oder kalten Gas gebracht, so daß angefrorene (oberflächlich oder teilweise gefrorene) oder durchgefrorene Teilchen wie Pellets oder Pulver entstehen. Das gekühlte oder kalte Gas hat im Allgemeinen eine Temperatur im Bereich von minus 120°C bis 0°C, vorzugsweise im Bereich von minus 120°C bis minus 10°C, bevorzugt im Bereich von minus 120°C bis minus 20°C, insbesondere im Bereich von minus 120°C bis minus 40°C. Das gekühlte oder kalte Gas ist vorzugsweise ein inertes Gas, beispielsweise Stickstoff.

Das Verfahren dient zur Herstellung von Pellets, Mikropellets oder Pulver. Als Pellets oder Mikropellets werden verfestigte, vorzugseise vollständig gefrorene, teilweise oder an der Oberfläche gefrorene Körper oder erstarrte Körper (bei Einsatz von Schmelzen), z.B. Kügelchen, aus einem zu pelletierenden Stoff verstanden, also die Endprodukte des Herstellverfahrens wie einer Pelletierung.

Der zu pelletierende oder in ein Pulver zu verwandelnde Stoff (der eingesetzte Stoff) ist in der Regel eine Flüssigkeit. Flüssigkeiten umfassen Lösungen, Schmelzen, Pasten, flüssige oder pastöse Zubereitungen, insbesondere für die Herstellung von Lebensmitteln. Der eingesetzte Stoff ist also vorzugsweise flüssig oder pastös. Mikropellets haben z.B. einen Durchmesser von 1 bis 750 Mikrometer (µ), vorzugsweise 1 bis 600 Mikrometer, insbesondere 200 bis 600 Mikrometer. Pulverteilchen haben eine ähnliche Größe.

Vorteilhaft werden mit einem unterkühlten Kreisgas (im Kreis geführtes kaltes Gas) z.B. Stickstoff aus einer Düse, z.B. Zweistoffdüse, gebildete Tröpfchen aus Lösungen oder Schmelzen in einem Kühlturm zu vorzugsweise Mikropellets gefroren bzw. erstarrt.

Mit dem bevorzugten Kreisgas-Kühlturm-Verfahren werden batchweise annähernd ohne nennenswerte Produktverluste (kleiner als 5 Gewichtsprozent) Lösungen bzw. Schmelzen zu Mikro-Pellets hergestellt. Bei dem Einsatz von kryogenen Gasen z.B. Stickstoff-flüssig (LN₂) als Kältemittel können sehr niedrige Kühltemperaturen z.B. bis-120°C, insbesondere im Bereich der Kühlstrecke, erreicht werden, so daß eine verhältnismäßig kompakte Bauweise (Kühlturmhöhe bis 4 m) im Vergleich zu herkömmlichen, konventionell betriebenen Kühlanlagen aufgestellt werden kann.

Das Verfahren kann kontinuierlich oder batchweise betrieben werden.

Die Erfindung wird anhand der Zeichnung erläutert.
Fig. 1 zeigt ein nicht erfindungsgemäßes Verfahrensschema eines Kreisgas-Kühlsystems zum Mikropelletieren von Lösungen oder Schmelzen.
Fig. 2 zeigt eine vorteilhafte Variante eines Kreisgas-Kühlsystems.

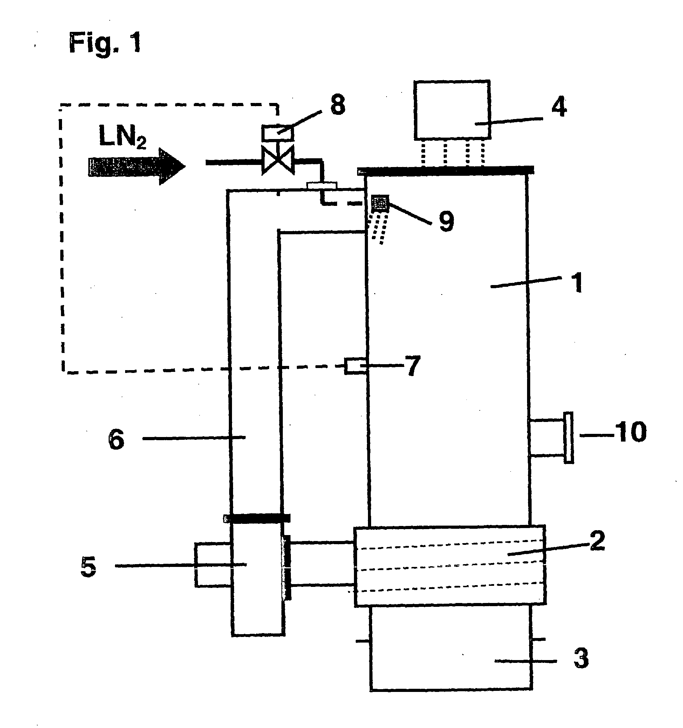

Das Kreisgas-Kühlsystem in Fig. 1 besteht aus einem isolierten Kühlturm 1, einem Abscheider 2, einem Auffangbehälter 3 und einem Ventilator 5 (Kreisgasventilator). Der Ventilator 5 ist mit dem Kühlturm 1 über eine isolierte Leitung 6 (Kreisgasleitung oder Rückführleitung) verbunden. Saugseitig des Ventilators wird das Kreisgas (rückgeführte Gas) z.B. Stickstoff in Gleichstromrichtung (bezogen auf die Bewegung der Teilchen) von oben nach unten im Kühlturm geführt. Über einen Temperaturfühler 7 wird das Ventil 8 (z.B. steuerbares Magnetventil) für das Kältemittel z.B. Stickstoff-flüssig angesteuert, um auf eine gewünschte Kühltemperatur von z.B. -80°C zu kommen. Das Kältemittel wird vorteilhaft über eine Düse 9 tangential zur Kreisgasführung eingesprüht, damit durch die zielgerichtete Einspeisung Verwirbelungen in dem Kühlturm entstehen. Durch die entstehenden Verwirbelungen bzw. Turbulenzen kann die gravimetrische Verweilzeit bzw. Fallzeit der Tröpfchen verlängert werden. Das bei der Verdampfung entstandende Abgas des Kältemittels wird über einen Abgasstutzen 10 abgeführt, damit in dem Kühlturm kein Überdruck entstehen kann. Über eine Tropfvorrichtung 4 fallen die gebildeten Mikro-Tröpfchen in dem Kühlturm und werden nach der Erstarrung in einem isoliertem Behälter aufgefangen. Die in dem Kreisgas mitgerissenen Mikropellets werden über einen integrierten Abscheider 2 abgetrennt.

### Beispiel 1:

Mit einem 90°C aufgeheizten Pharma-Polymer werden über eine Mikrotropfvorrichtung (4) Tröpfchen (Durchmesser um 250µ) mit einer Frequenz von 100 Tröpfchen pro Sekunde gebildet. Die Tröpfchen fallen in einem 4 m hohen Kühlturm und wurden bei einer Kühltemperatur von -50°C zu Mikropellets erstarrt. Die kugeligen und annähernd gleich großen Mikropellets hatten in dem Auffangbehälter eine Temperatur von 5°C. Über eine Flüssigstickstoff-Versorgungseinheit (LN₂) ist das Kältemittel Stickstoff-flüssig bei einem Druck von 3 bar in den Kreisgasstrom eingesprüht worden. Die Produkt-Verweilzeit im Kühlturm lag bei ca.1 Sekunde, im Vergleich zur gravimetrischen Fallzeit von ca. 0,1 Sekunden.

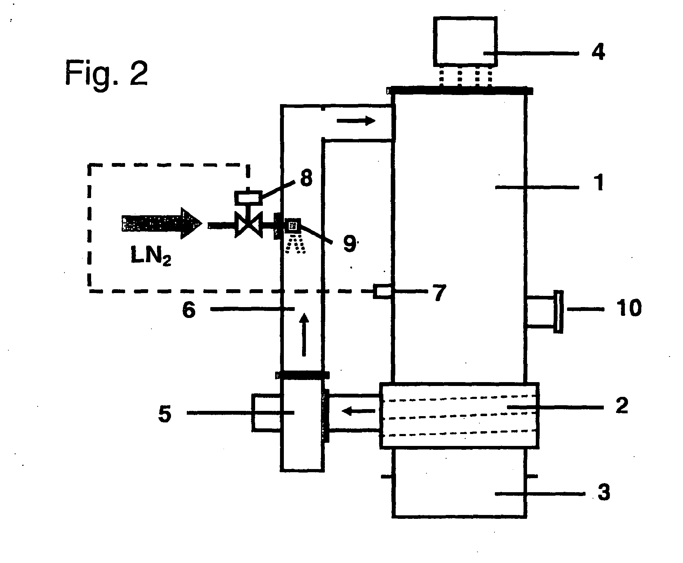

Fig. 2 zeigt ein erfindungsgemäßes Verfahrensschema des Kreisgas-Kühlsystemes zum Mikropelletieren und auch zum Pulverisieren von Lösungen oder Schmelzen.

Das Kreisgas-Kühlsystem in Fig. 2 besteht wie in Fig.1 aus einem isolierten Kühlturm 1, einem Abscheider 2, einem Auffangbehälter 3 und einem Kreisgasventilator 5. Der Ventilator 5 ist mit dem Kühlturm 1 über eine isolierte Leitung 6 (Kreisgasleitung) verbunden. Saugseitig des Ventilators wird das Kreisgas z.B. Stickstoff in Gleichstromrichtung von oben nach unten im Kühlturm geführt. In Abweichung zu Fig. 1 wird bei diesem Verfahrensschema (Fig. 2) das Ventil 8 (z.B. steuerbares Magnetventil) in der Leitung 6, zum Kühlen des Kreisgases von z.B. - 30°C über eine Düse 9, eingesetzt, damit ausschließlich nur gasförmiges Kältemittel z.B. Stickstoff tangential in dem Kühlturm eingespeist wird. Durch die zielgerichtete tangentiale gasförmige Einspeisung entstehen Verwirbelungen, durch die die gravimetrische Verweilzeit bzw. Fallzeit der Tröpfchen verlängert wird. Die über eine Sprühvorrichtung 4 gebildeten Tröpfchen (Tröpfchengröße z.B. von 10 bis 400 Mikrometer) erstarren fallend in dem unterkühlten Kühlturm und werden in einem isolierten Behälter 3 aufgefangen. Die in dem Kreisgas mitgerissenen erstarrten Tröpfchen werden über einen integrierten Abscheider 2 abgetrennt. Das bei der Verdampfung entstandende Abgas des Kältemittels wird über einen Abgasstutzen 10 abgeführt, damit in dem Kühlturm kein Überdruck entstehen kann.

### Beispiel 2:

Über eine Sprühvorrichtung 4 werden mit einer 80°C aufgeheizten fetthaltigen Schmelze Tröpfchen (von 10 bis 200 µ) gebildet. Die Tröpfchen fallen in einem 4 m hohen Kühlturm 1 und werden bei einer Kühltemperatur von - 30°C zu Pulver erstarrt. Das pulverförmige Produkt hatte in dem Auffangbehälter 3 eine Temperatur von 10° C. Das Kältemittel Stickstoff-flüssig wird bei einem Druck von 4 bar in der Kreisgasleitung 6 nach unten zielgerichtet eingesprüht, damit nur gasförmiger Stickstoff in den Kühlturm tangential eingespeist wird. Die Produkt-Verweilzeit im Kühlturm liegt bei ca. 1 Sekunde, im Vergleich zur gravimetrischen Fallzeit (bei direktem Fall) von ca. 0,1 Sekunden.

## Patentansprüche

1. Verfahren zur Herstellung von Pellets, Mikropellets oder Pulvern aus einem flüssigen oder pelletierbaren Stoff, wobei zur Herstellung von Pellets, Mikropellets oder Pulvern der flüssige oder pelletierbare Stoff in Form kleiner Teilchen in einem Kühlturm (1) mit einem kalten Gas in Kontakt gebracht wird, wobei das kalte Gas in einer Kreisgasleitung (6) und im Kühlturm (1) im Kreis geführt wird, **dadurch gekennzeichnet, dass** in die Kreisgasleitung (6) ein Kältemittel zur Erzeugung des kalten Gas eingesprüht wird.

2. Verfahren nach Anspruch 1, **dadurch gekennzeichnet, daß** das kalte Gas als tangentialer Gasstrom eingesetzt wird.

3. Verfahren nach Anspruch 1 oder 2, bei dem das kalte Gas durch Zugabe eines kälteverflüssigten Gases erzeugt wird.

## Claims

1. Method for the production of pellets, micropellets or powders from a liquid or pelletizable substance, for the production of pellets, micropellets or powders the liquid or pelletizable substance being brought into contact in the form of small particles with a cold gas in a cooling tower (1), the cold gas being circulated in a circulatory gas line (6) and in the cooling tower (1), **characterized in that** a refrigerant for generating the cold gas is sprayed into the circulatory gas line (6) .

2. Method according to Claim 1, **characterized in that** the cold gas is used as a tangential gas stream.

3. Method according to Claim 1 or 2, in which the cold gas is generated by the addition of a cold-liquefied gas.

## Revendications

1. Procédé pour la production de pellets, de micropellets ou de poudres à partir d'une substance liquide ou pelletisable, où, pour la production de pellets, de micropellets ou de poudres, la substance liquide ou pelletisable est mise en contact sous forme de petites particules dans une tour de refroidissement (1) avec un gaz froid, où le gaz froid est guidé en circuit dans une conduite de gaz en circulation (6) et dans la tour de refroidissement (1), **caractérisé en ce qu'**on pulvérise un agent de refroidissement dans la conduite de gaz en circulation (6) pour la production du gaz froid.

2. Procédé selon la revendication 1, **caractérisé en ce que** le gaz froid est utilisé sous forme d'un flux gazeux tangentiel.

3. Procédé selon la revendication 1 ou 2, dans lequel le gaz froid est obtenu par addition d'un gaz liquéfié à froid.
